(19) Europäisches Patentamt / European Patent Office / Office européen des brevets

(11) **EP 4 480 734 A1**

(12) **EUROPEAN PATENT APPLICATION**

(43) Date of publication:
**25.12.2024 Bulletin 2024/52**

(21) Application number: **23180042.6**

(22) Date of filing: **19.06.2023**

(51) International Patent Classification (IPC):
**B60L 3/00** (2019.01)   **B60L 3/12** (2006.01)
**B60L 58/21** (2019.01)   **H02J 7/14** (2006.01)

(52) Cooperative Patent Classification (CPC):
**B60L 58/21; B60L 3/0023; B60L 3/12;**
**H02J 7/1423;** B60L 2240/547; B60L 2240/549;
B60L 2260/44

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Volvo Truck Corporation**
**405 08 Göteborg (SE)**

(72) Inventors:
• **NETTO, Diego Santos Pereira**
  **436 37 ASKIM (SE)**
• **ADELSSON, Per**
  **418 77 GÖTEBORG (SE)**

(74) Representative: **Kransell & Wennborg KB**
**P.O. Box 2096**
**403 12 Göteborg (SE)**

(54) **A METHOD FOR OPERATING A SWITCHING ARRANGEMENT OF AN ENERGY STORAGE SYSTEM IN A VEHICLE**

(57)   A computer system comprising processing circuitry configured to:
- provide a characterization model for each one of a plurality of contactors of a switching arrangement, each contactor being configured to connect and disconnected an associated battery pack of an energy storage system of a vehicle by closing and opening, respectively, the characterization model defining contactor wear for contactor opening with regards to a plurality of system parameters, the system parameters comprising at least current and voltage during contactor opening,
- determine the system parameters during operation of the switching arrangement,
- estimate, for each one of the contactors, the contactor wear by applying the determined system parameters to the corresponding characterization model;
- control the order in which the contactors are opened in response to the estimated contactor wear, and/or predicting maintenance of contactor, or contactor exchange, in response to the estimated contactor wear.

Fig. 2

EP 4 480 734 A1

## Description

## TECHNICAL FIELD

The disclosure relates generally to operating management of battery packs in an energy storage system of a vehicle. In particular aspects, the disclosure relates to a method for controlling a switching arrangement of an energy storage system of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

A vehicle typically comprises an engine for propelling the vehicle. The engine may be an internal combustion engine powered by e.g. liquid or gaseous fuel, or it may be an electric machine powered by electricity. Moreover, hybrid solutions exist in which the vehicle is propelled both by an internal combustion engine and an electric machine. In either way, an energy storage device is used to store the energy needed in order to propel the vehicle. Energy storage devices may further be used to power auxiliary loads in the vehicle.

For many vehicles, the energy storage devices are comprised in an energy storage system, wherein the energy storage system is configured to power the electric machine for propelling the vehicle, as well as any auxiliary load. For example, for an electric vehicle, the energy storage devices may be batteries or battery packs, which are configured to operate the electric machine as well as electrically driven auxiliary equipment. The electric machine and/or the electrically driven auxiliary equipment may be commonly referred to as a load. Several batteries, or several series-connected and/or parallel connected battery cells, may be grouped into the battery pack. The battery pack is periodically in need of charging, and is then electrically connected to an electrical energy source, e.g. via plug directly connected to the power grid, or by an on-board charger. Such chargers may commonly be referred to as a power source.

In many applications, several battery packs are included in the energy storage system by being parallelly connected to a common traction voltage bus (or common traction power bus), sometimes referred to as multi-battery pack system. The load and/or power source is also connected to the common traction voltage bus. Hereby, the supplied power can be adapted based on the number of battery packs, and/or higher power requirements of the vehicle may be met. Typically, each battery pack is associated with a switch, or contactor, enabling connection and disconnection of the battery pack relative the common traction voltage bus and the load and/or power source. However, every time the state of a contactor is changed from closed to open, or vice versa, the contactor is subject to mechanical and electrical wear in the form of contactor wear.

Contactor wear as described above may lead to contactor failure. In particular, premature contactor failure of a single contactor is undesirable, as sometimes more than the failing contactor have to be replaced, which may be very cumbersome.

## SUMMARY

According to a first aspect of the disclosure, computer system comprising processing circuitry is provided. The processing circuitry is configured to: provide a characterization model for each one of a plurality of contactors of a switching arrangement, each contactor being configured to connect and disconnected an associated battery pack of an energy storage system of a vehicle by closing and opening, respectively, the characterization model defining contactor wear for contactor opening with regards to a plurality of system parameters, the system parameters comprising at least current and voltage during contactor opening; determine the system parameters during operation of the switching arrangement; estimate, for each one of the contactors, the contactor wear by applying the determined system parameters to the corresponding characterization model; control the order in which the contactors are opened in response to the estimated contactor wear, and/or predicting maintenance of contactor, or contactor exchange, in response to the estimated contactor wear.

The first aspect of the disclosure may seek to overcome problems relating to decreased life-length of the switching arrangement, as the estimated contactor wear due to contactor opening is improved by applying the characterization model. Thus, the order in which the contactors are opened may be controlled in response to the estimated contactor wear, resulting in an improved distribution of contactor wear among the contactors in the switching arrangement, and/or maintenance of contactor, or contactor exchange, may be predicted in response to the estimated contactor wear. Hereby, excessive contactor wear of a single contactor leading to contactor failure may be avoided. A technical benefit of the first aspect of the disclosure may thus include increased life-length of the switching arrangement. That is, by implementing the characterization model using the system parameters for each one of the contactors, an improved estimation of the contactor wear is provided, and the improved estimation of the contactor wear may be implemented in the control strategy related to the order in which the contactors are opened, and/or in the maintenance strategy of contactors. It should be noted that the system parameters comprising at least current and voltage during contactor opening is referring to the current and voltage over the corresponding contactor during contactor opening.

In some examples, including in at least one preferred example, optionally the processing circuitry is further configured to: receive measurement data from a plurality of sensors of the energy storage system, wherein the measurement data comprises the system parameters. A technical benefit may include usage of reliable data and efficient handling and communication of data. The plurality of sensors may e.g. include a current sensor and/or a voltage sensor for each one of the contactors. Such current sensor and voltage sensor are typically arranged to measure the current and voltage, respectively, over the corresponding contactor.

In some examples, including in at least one preferred example, optionally the processing circuitry is further configured to: identify a plurality of parallelly arranged battery packs connected to a common traction voltage bus of the energy storage system, and identify the associated contactors to the plurality of parallelly arranged battery packs, wherein controlling the order in which the contactors are opened is performed for all of the plurality of parallelly arranged battery packs until no battery pack is connected to the common traction voltage bus. A technical benefit may include improved control strategy related to the order in which the contactors are opened. For example, the contactors that is opened last, i.e. which after no battery packs are connected to the common traction voltage bus, may be particularly chosen based on the estimated contactor wear using characterization model.

The battery packs of the energy storage system is preferably parallelly arranged battery packs. Thus, the processing circuitry of the first aspect may be described as being configured to operate a switching arrangement of an energy storage system, the energy storage system comprising a plurality of parallelly arranged battery packs and the switching arrangement comprising an associated contactor for each battery pack, the contactors being configured to connect the battery packs to a common traction voltage bus by closing and to disconnect the battery packs from the common traction volage bus by opening.

In some examples, including in at least one preferred example, optionally the processing circuitry is further configured to: subsequent to controlling the order in which the contactors are opened, connect the battery packs to the common traction voltage bus by closing the contactors, and thereafter: alternately connect and disconnect the battery packs from and to the common traction voltage bus, wherein controlling the order in which the contactors are opened is performed for each disconnection. A technical benefit may include improved control strategy related to the order in which the contactors are opened and closed. For example, in each disconnection, or disconnection sequence, of the battery packs from the common traction voltage bus, all battery packs are disconnected until no battery pack is connected to the common traction voltage bus. Moreover, in each connection, or connection sequence, of the battery packs to the common traction voltage bus, all battery packs may be connected until all battery packs are connected to the common traction voltage bus.

In some examples, including in at least one preferred example, optionally the processing circuitry is further configured to: determine accumulated contactor wear for each one of the contactors by applying the characterization model for each one of the contactors during each contactor opening. A technical benefit may include an improved estimation of the contactor wear.

In some examples, including in at least one preferred example, optionally the system parameters further include at least one of the following: temperature, inductance, altitude, and contactor design during contactor opening. A technical benefit may include an improved estimation of the contactor wear. That is, by including further parameters than the current and voltage during contactor opening in the characterization model, the estimation of the contactor wear during contactor opening can be improved. In other words, in addition to including the contactor current and voltage upon contactor opening, the contactor temperature, contactor inductance, altitude, and/or contactor design can be implemented in the characterization model. It should be understood that the system parameters of a particular contactor is typically determined just prior to opening the contactor. As the altitude is a pressure-dependent parameter, and as the pressure may influence the contactor wear upon contactor opening (e.g. related to the formation and extinguishing of electric arcs), the pressure, or atmospheric pressure, may be used instead of the altitude.

In some examples, including in at least one preferred example, optionally the characterization model defines the contactor wear as a function of the plurality of system parameters, the system parameters comprising at least current and voltage during contactor opening and additionally a third system parameter being at least one of the following: temperature, inductance, altitude, and contactor design during contactor opening. A technical benefit may include an improved estimation of the contactor wear.

In some examples, including in at least one preferred example, optionally the characterization model is defined by:

$$CW = A*I+B*V+C*X$$

Wherein CW is the contactor wear for a contactor, I is the current over the contactor, V is the voltage over the contactor, X is a third system parameter, e.g. the temperature, at contactor opening and A, B and C are constants. A technical benefit may include an improved estimation of the contactor wear.

In some examples, including at least one preferred example, optionally the a characterization model comprises a function y=f(x) for each system parameter. Each function f(x) may e.g. defined as f(x) = A* x, where the A is determined during the parametrization (perform by characterization tests, described later) and the x is the system parameter.

In some examples, including at least one preferred example, optionally the processing circuitry is further configured to: control the order in which the contactors are opened in response to the estimated contactor wear in such a way that the contactor wear is accounted for and used to distribute contactor wear among the contactors during subsequent opening of the contactors. A technical benefit may include improved control strategy related to the order in which the contactors are opened. For example, and with reference to the earlier described disconnection, or disconnection sequence, of the battery backs from the common traction voltage bus, the contactors may be disconnected in such a way that the accumulated contactor wear is accounted for and used to distribute additional contactor wear among the contactors during the control of the order in which the contactors are opened. In other words, the processing circuitry may be further configured to keep track of the contactor wear, or accumulated contactor wear, of each contactor.

It should be noted that the common traction voltage bus may be electrically connected to at least one load, such as e.g. an electric traction machine of the vehicle. Hereby, the battery packs may power the load. Thus, the processing circuitry may be configured to connect the battery packs to the load by closing the contactors in the previously mentioned controlled order, and to disconnect the battery packs from the load by opening the contactors.

In some examples, including in at least one preferred example, optionally the processing circuitry is further configured to: control the order in which the contactors are opened in response to the estimated contactor wear in such a way that a contactor other than the contactor having the highest contactor wear is opened as the last contactor. A technical benefit may include increased life-length of the switching arrangement. That is, by not opening the contactor with the highest contactor wear last, such contactor will not be subject to the relatively high contactor wear associated with being opened last, and thereby a single contactor failure due to contactor wear can be avoided, or at least be prolonged. With reference to the earlier described examples in which controlling the order in which the contactors are opened is performed for all of the plurality of parallelly arranged battery packs until no battery pack is connected to the common traction voltage bus, the contactor being opened last is referring to the contactor for which opening results in that no battery pack is connected to the common traction voltage bus.

The contactor wear referred to herein may be mechanical wear and/or electrical wear. The electric wear of a contactor is typically higher than the mechanical wear, and thus more significant for determining the contactor wear affecting the life length of the contactor. Electric wear may e.g. origin from electric arcs in the air gap of a non-closed contactor. Electric arcs typically appear when the voltage over the air gap exceeds the breakdown voltage of air (3kV/mm) or when an inductive circuit is broken since an inductor opposes a change of the current through it. The electric breakdown voltage will typically be exceeded when a contactor is opened under load since the air gap initially is zero. The resistivity of the resulting electric arc is low meaning that the electric arc will be sustained for a short time before it is interrupted. When a contactor is closed, on the other side, the electric breakdown voltage is typically exceeded just before the contactor reaches a fully closed state, resulting in a small electric arc.

Thus, the contactor wear upon opening of the contactor may be at least partly due to the formation of electric arcs. The effect of such electric arcs on the contactor wear may be estimated in an advantageous manner by the characterization model applying the system parameters. As the formation of the electric arcs may be the result of residue energy, or residue inductance, remaining in the energy storage system (e.g. on the common traction voltage bus) subsequent to a shutdown of the load, the residue energy, or residue inductance, may be included in the plurality of system parameters. The electric arcs will be especially prominent in a scenario in which all battery packs of the energy storage system are being disconnected from the common traction voltage bus (by contactor opening), such that no battery pack is connected to the common traction voltage bus, and in particular for the contactor being opened las. By applying the characterization model to estimate the contactor wear and controlling the order in which the contactors are opened and the battery packs disconnected in response to such estimated contactor wear, the imminent, or future, contactor wear can be better allocated between the contactors, e.g. by controlling which of the contactors that is opened last. For example, this may be achieved by varying, or cycling, the contactor which is opened last in a manner taking the accumulated contactor wear based on the characterization model among the contactors into account. As previously described, when referring to that a contactor being opened last, the last battery pack is disconnected from the common traction voltage bus, and that after such disconnection, no battery pack is connected to the common traction voltage bus (i.e. all of the contactors are opened).

According to a second aspect of the disclosure, a switching arrangement for an energy storage system of vehicle is provided. The energy storage system comprises a plurality of parallelly arranged battery packs and the switching arrangement comprises an associated contactor for each battery pack, the contactors being configured to connect and disconnect the battery packs by closing and opening, respectively. The switching arrangement further comprises a control unit configured to: provide a characterization model for each one the contactors, the characterization model defining contactor wear for contactor opening with regards to a plurality of system parameters, the system parameters comprising at least current and voltage during contactor opening; determine the system parameters during operation of the switching arrangement; estimate, for each one of the contactors, the contactor wear by applying the determined system parameters to the corresponding characterization model; control the order in which the contactors are opened in response to the estimated contactor wear, and/or predicting maintenance of contactor, or contactor exchange, in response to the estimated contactor wear. The second aspect of the disclosure may seek to solve the same problem as described for the first aspect of the disclosure. Thus, effects and features of the second aspect of the disclosure are largely analogous to those described above in connection with the first aspect of the disclosure. Examples and disclosures mentioned in relation to the first aspect of the disclosure are largely compatible with the second aspect of the disclosure, and vice versa. For example, the energy storage system comprises a common traction voltage bus as described with reference to the first aspect of the disclosure, and the control unit is configured to connect and disconnect the battery packs to and from the common traction voltage bus by closing and opening, respectively. The control unit may e.g. comprise, or be comprised in, the processing circuitry described in the first aspect of the disclosure.

According to a third aspect of the disclosure, a vehicle comprising the computer system of the first aspect of the disclosure, or a switching arrangement of the second aspect of the disclosure, is provided. The third aspects of the disclosure may seek to solve the same problem as described for the first to second aspects of the disclosure. Thus, effects and features of the third aspect of the disclosure are largely analogous to those described above in connection with the first to second aspects of the disclosure. The vehicle may e.g. comprise an energy storage system comprising a plurality of parallelly arranged battery packs as previously described.

According to a fourth aspect of the disclosure, a computer-implemented method is provided. The method comprises: providing, by a processing circuitry of a computer system, a characterization model for each one of a plurality of contactors of a switching arrangement, each contactor being configured to connect and disconnected an associated battery pack of an energy storage system of a vehicle by closing and opening, respectively, the characterization model defining contactor wear for contactor opening with regards to a plurality of system parameters, the system parameters comprising at least current and voltage during contactor opening; determining, by the processing circuitry, the system parameters during operation of the switching arrangement; estimating, by the processing circuitry, for each one of the contactors, the contactor wear by applying the determined system parameters to the corresponding characterization model; controlling, by the processing circuitry, the order in which the contactors are opened in response to the estimated contactor wear, and/or predicting, by the processing circuitry, maintenance of contactor, or contactor exchange, in response to the estimated contactor wear. The fourth aspects of the disclosure may seek to solve the same problem as described for the first to third aspects of the disclosure. Thus, effects and features of the fourth aspect of the disclosure are largely analogous to those described above in connection with the first to third aspects of the disclosure.

In some examples, including in at least one preferred example, optionally the method further comprises: receiving, by the processing circuitry, measurement data from a plurality of sensors of the energy storage system, wherein the measurement data comprises the system parameters. A technical benefit may include usage of reliable data and efficient handling and communication of data, as described for the first aspect of the disclosure.

In some examples, including in at least one preferred example, optionally the method further comprises: identifying, by the processing circuitry, a plurality of parallelly arranged battery packs connected to a common traction voltage bus of the energy storage system, and identifying, by the processing circuitry, the associated contactors to the plurality of parallelly arranged battery packs, wherein controlling the order in which the contactors are opened is performed for all of the plurality of parallelly arranged battery packs until no battery pack is connected to the common traction voltage bus. A technical benefit may include improved control strategy related to the order in which the contactors are opened, as described for the first aspect of the disclosure.

In some examples, including in at least one preferred example, optionally the method further comprises: determining, by the processing circuitry, accumulated contactor wear for each one of the contactors by applying the characterization model for each one of the contactors during each contactor opening. A technical benefit may include an improved estimation of the contactor wear, as described for the first aspect of the disclosure.

In some examples, including in at least one preferred example, optionally the characterization model defines the contactor wear as a function of the plurality of system parameters, the system parameters comprising at least current and voltage during contactor opening and additionally a third system parameter being at least one of the following: temperature, inductance, altitude, and contactor design during contactor opening. A technical benefit may include an improved estimation of the contactor wear, as described for the first aspect of the disclosure.

In some examples, including in at least one preferred example, optionally the method further comprises: controlling, by the processing circuitry, the order in which the contactors are opened in response to the estimated contactor wear in such a way that the contactor wear is accounted for and used to distribute contactor wear among the contactors during subsequent opening of the contactors. A technical benefit may include improved control strategy related to the order in which the contactors are opened, as described for the first aspect of the disclosure.

According to a fifth aspect of the disclosure, a computer program product comprising program code for performing, when executed by the processing circuitry, the method of the fourth aspect of the disclosure is provided.

According to a sixth aspect of the disclosure, non-transitory computer-readable storage medium comprising instructions, which when executed by the processing circuitry, cause the processing circuitry to perform the method of the fourth aspect of the disclosure is provided.

The fifth to sixth aspects of the disclosure may seek to solve the same problem as described for the first to fourth aspects of the disclosure. Thus, effects and features of the fifth to sixth aspects of the disclosure are largely analogous to those described above in connection with the first to fourth aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

**Fig. 1** is an exemplary, partly schematic, side view of an electric vehicle comprising an energy storage system having a plurality of parallelly arranged battery packs, and a control unit according to one example.

**Fig. 2** is a schematic view of a switching arrangement for an energy storage system of a vehicle, the energy storage system having a plurality of parallelly arranged battery packs and a control unit according to one example.

**Fig. 3** is a flowchart illustrating the actions or steps of a method according to one example.

**Fig. 4** is a schematic view of a switching arrangement for an energy storage system of a vehicle according to one example.

**Fig. 5** is a schematic diagram of an exemplary computer system for implementing examples disclosed herein, according to one example.

## DETAILED DESCRIPTION

The detailed description set forth below provides information and examples of the disclosed technology with sufficient detail to enable those skilled in the art to practice the disclosure.

The object of the disclosed technology is to solve the problem relating to decreased life-length of the switching arrangement. The disclosed technology solves the problem by, inter alia, estimating the contactor wear due to contactor opening by applying a characterization model. The characterization model estimates contactor wear for contactor opening with regards to a plurality of system parameters, the system parameters comprising at least current and voltage during contactor opening. By controlling the order in which the contactors are opened in response to the estimated contactor wear by using the characterization model, an improved distribution of contactor wear among the contactors in the switching arrangement, and/or maintenance of contactor, or contactor exchange, may be predicted in response to the estimated contactor wear.

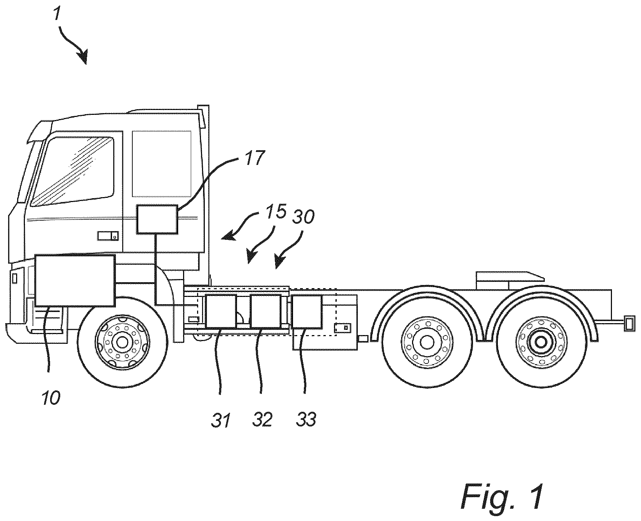

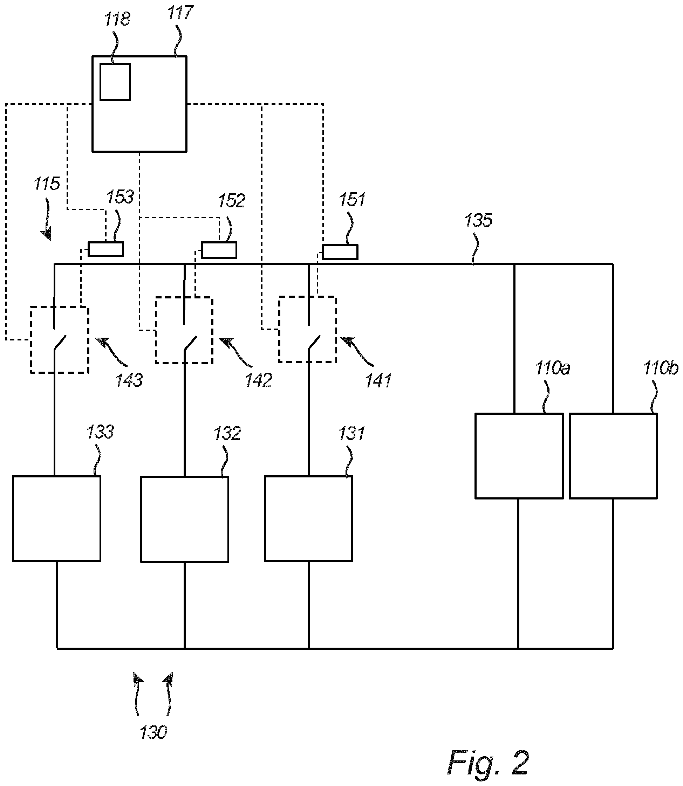

FIG. 1 shows a vehicle 1 in the form of an exemplary heavy duty truck. The vehicle 1 is an electric vehicle, such as a full electric vehicle or a hybrid, comprising at least one electric machine 10 (as an electric traction machine) powered by an energy storage system 30, wherein in the example of Fig. 1, the energy storage system 30 comprises three parallelly connected battery packs 31, 32, 33. The battery packs 31, 32, 33 are configured to power at least one load, such as the electric machine 10. The vehicle 1 further comprises a switching arrangement 15 including an associated contactor for each battery pack 31, 32, 33 (exemplified in Fig. 2), the contactors being configured to connect and disconnect the battery packs 31, 32, 33 by closing and opening, respectively. Moreover, the switching arrangement comprises a control unit 17 (comprising, or being comprised in, a processing circuitry) arranged and configured for controlling at least parts of the operation of the switching arrangement 15 and/or the energy storage system 30. The vehicle 1 typically further comprises other parts of the powertrain such as transmission, drive shafts and wheels (not shown in detail). The electric machine 10 may be operated as an electric motor consuming electricity provided by the battery packs 31, 32, 33, e.g. to provide propulsion power, and may be operated as a generator to generate electricity to charge the battery packs 31, 32, 33.

FIG. 2 is a schematic view of a switching arrangement 115 and an energy storage system 130 having a plurality of parallelly connected battery packs 131, 132, 133, and a control unit 117 including, or included in, processing circuitry. The example shown in Fig. 2 may be implemented in the vehicle 1 of Fig. 1. The plurality of battery packs 131, 132, 133 is arranged in parallel for connection to a common traction voltage bus 135 and powering of a plurality of loads 110a, 110b (e.g. one of the loads 110b being an electric machine, e.g. as electric machine 10 of Fig. 1). The switching arrangement 115 is configured to connect and disconnect the battery packs 131, 132, 133 to and from the common traction voltage bus 135. The common traction voltage bus 135 may in some examples be comprised in a junction box.

Each one of the battery pack 131, 132, 133 typically comprises a plurality of series-connected battery cells. The battery cells may be clustered into battery modules, wherein each battery pack 131, 132, 133 comprises a plurality of series-connected battery modules. The energy storage system 130 may be referred to as a multi-battery pack system.

In more detail, the energy storage system 130 comprises a first battery pack 131, a second battery pack 132 and a third battery pack 133, but it should be noted that any number of battery packs equal to, or higher than, two may be included in the energy storage system 130. The switching arrangement 115 comprises an associated contactor 141, 142, 143 for each battery pack 131, 132, 133. Thus, the switching arrangement 115 comprises a first contactor 141 configured to connect and disconnect the first battery pack 131 to and from to the common traction voltage bus 135 by closing and opening, respectively, and comprises a second contactor 142 configured to connect and disconnect the second battery pack 132 to and from the common traction voltage bus 135 by closing and opening, respectively, and comprising a third contactor 143 configured to connect and disconnect the third battery pack 133 to and from the common traction voltage bus 135 by closing and opening, respectively. Thus, an associated contactor, here being the first, second and third contactors 141, 142, 143, is provided for each battery pack, here being the corresponding first, second and third battery packs 131, 132, 133. The plurality of loads 110a, 110b may be powered by all, or any one, of the first, second and third battery packs 131, 132, 133 by closing the corresponding first, second and third contactors 141, 142, 143 (i.e. by connecting the first, second and third battery packs 131, 132, 133 to the common traction voltage bus 135).

Any one of, or all of, the first, second and third battery packs 131, 132, 133 may be disconnected from the common traction power bus 135 by opening the corresponding the first, second and third contactors 141, 142, 143. The control unit 117 is configured to control at least part of the operation of the switching arrangement 115. The switching arrangement 115 is, via the control unit 117, configured to disconnect the first, second and third battery packs 131, 132, 133 from the common traction voltage bus 135 by means of the first, second and third contactors 141, 142, 143, respectively. The switching arrangement 115 may comprise additional contactors (e.g. pre-charge contactors, secondary contactors) for one or more of the battery packs 131, 132, 133.

In a first state being a fully connected state, each one of the first, second and third contactors 141, 142, 143 are closed and each one of the first, second and third battery packs 131, 132, 133 are connected to the common traction voltage bus 135 for powering the plurality of loads 110a, 110b. In a second state, being a disconnection state, one, two, or all three of the first, second and third contactors 141, 142, 143 are opened to disconnect the corresponding first, second and/or third battery pack 131, 132, 133 from the common traction voltage bus 135 (shown by the dashed contactor in each one of the first, second and third contactors 141, 142, 143).

The energy storage system 130 of Fig. 2 comprises a plurality of sensors configured to measure at least current and voltage for each one of the contactors 141, 142, 143. In more detail, a first sensor 151 is configured to measure the current and voltage of the first contactor 141, a second sensor 152 is configured to measure the current and voltage of the second contactor 142, and a third current 153 is configured to measure the current and voltage of the third contactor 143. Each one of the first, second and third sensors 151, 152, 153 is schematically shown in Fig. 2 and may be a corresponding current and voltage sensor, or be comprised of different sensors for measuring current and voltage. Such current sensor and voltage sensor are typically arranged to measure the current and voltage, respectively, over the corresponding contactor 141, 142, 143.

Upon disconnection of a battery pack 131, 132, 133, and opening of the corresponding contactor 141, 142, 143, the contactor 141, 142, 143 is subject to contactor wear. The level of contactor wear for a specific contactor opening is dependent on various system parameters. By implementing a characterization model estimating the contactor wear upon contactor opening with regards to a such system parameters, an improved estimation of the contactor wear may be provided.

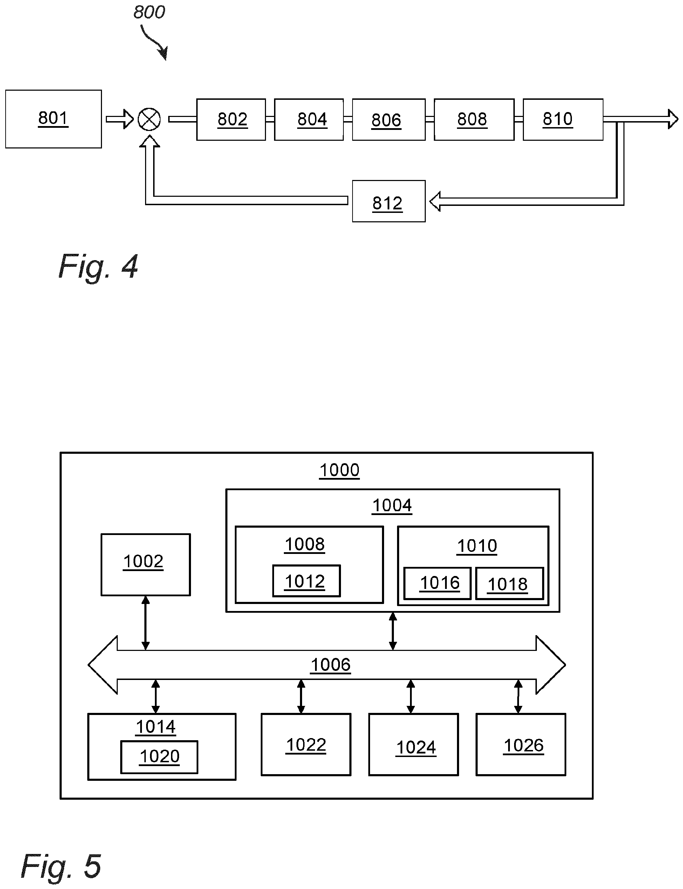

FIG. 4 shows an exemplary scheme 800 for characterizing such characterization model 801 for a contactor. A corresponding switching arrangement as that of Fig. 2, including the sensors 151, 152, 153 may e.g. be used when applying the scheme 800 to characterize the characterization model for a contactor. The characterization of the characterization model is performed by characterization tests with regards to how the contactor wear dependents on at least the current 802 and voltage 804 over the contactor upon contactor opening. Moreover, other system parameters as temperature 806 of the contactor, system inductance 808 at the common traction voltage bus, and altitude 810 of the vehicle, upon contactor opening may be included in the scheme 800. In an exemplary characterization method, a plurality of characterization tests is performed for the same contactor until failure, e.g. the contactor being broken or welded stuck ("end of life" of the contactor). A plurality of contactors, e.g. contactors of different types or contactors intended for different positions in the energy storage system, may be subjected to the characterization tests. Moreover, a plurality of contactors of the same type may be tested in parallel, with the same conditions and system parameters except for one system parameter that is intentionally varied (e.g., all the contactors run the characterization tests with same voltage, temperature, inductance, and altitude, but each contactor opens at different currents, e.g. contactor 1 at 10 A, contactor 2 at 30 A, etcetera), wherein the characterization tests are repeated until failure. Thereafter, another set of characterization tests is performed with another system parameter being varied on each contactor and repeated until failure. During the characterization tests, all system parameters, e.g. voltage across the contactor poles, current and internal temperature of the contactor upon contactor opening, are logged, at least during an arcing phase of the contactor opening. The characterization tests may be referred to as parametrization of the characterization model.

A health check of the contactor contacts and a determination of the resistance 812 between the contactor poles may also be performed to track component wear until failure. The health check may be performed by measurements of the contactor resistance when the contactor is closed. Since the surface of the contacts of the contactor get progressively irregular, the electrical resistance increases with a degrading contactor (i.e. an increasing contactor wear). In addition, or as an alternative, the insulation resistance between the contactor poles when the contactor is opened could be used to track component wear until failure. Measuring the resistance (contactor resistance when the contactor is closed and/or insulation resistance when the contactor is opened) could feedback the system about the health status. Hereby, the characterization model for a contactor, including the contribution of each system parameter for contactor wear, can be formed. The contactor wear may e.g. be defined by a value of between 0 and 100, where 0 is corresponding to no wear and 100 corresponding to a single wear leading to contactor failure ("end of life"). The contactor wear may preferably be deducted from a contactor state of health, for which a value of 100 corresponds to maximum health, i.e. an unworn contactor, and a value of 0 corresponds to minimum health, i.e. a worn out and non-functional contactor (i.e. contactor failure). The characterization model may also include the condition of the contactor at failure (e.g. broken or welded stuck).

The results from the characterization tests may be summarized in a characterization model by a corresponding function, $y = f(x)$ for each system parameter x. The parameter y thus representing the contactor wear (or contactor wear contribution), e.g. by the value of between 0 and 100. Thus, the accumulated contactor wear for a contactor being subjected to a plurality of contactor openings can be logged. Each function may be plotted as a two-dimensional graph $(x, y)$. The functions $y = f(x)$ for the system parameters, and thus the characterization model, may be different (linear, exponential, etc.) for different types of contactors (i.e. different contactor designs). The characterization model for a specific contactor (or contactor type) may be simplified by agglomerating the various functions for the different system parameters by applying a Laplace transform for each function, simplify the Laplace transformed equations to one single function, and reverse the Laplace transform.

Turning back to Fig. 2, the sensors 151, 152, 153 may thus provide measurement data to the control unit 117, wherein the measurement data comprises the system parameters of at least current and voltage over the respective contactors 141, 142, 143. In addition to the sensors 151, 152, 153 shown in Fig. 2, the switching arrangement 115 may comprise additional sensors for measuring various system parameters. For example, the additional sensors may comprise temperature sensors, preferably arranged in close proximity to the contactors (e.g. NTC sensors), an LCR meter circuit configured to estimate the inductance at the contactors, e.g. the inductance of the common traction voltage bus, an altitude onboard meter onboard, and an insulation resistance monitoring circuit. Thus, each one of the system parameters x described with reference to Fig. 4 (current 802, voltage 804, temperature 806, inductance 808, altitude 810 and resistance 812) may be measured in the energy storage system 130 of Fig. 2 by corresponding sensors and sensor circuits. For example, during initialization the energy storage system 130 and prior connection of the battery packs 131, 132, 133 to the common traction voltage bus 135 (i.e. the contactors 141, 142, 143), the LCR meter circuit may execute an inductance check and register the measured inductance. Upon subsequent connection of the battery packs 131, 132, 133 to the common traction voltage bus 135 (i.e. the contactors 141, 142, 143 are closed) and succeeding openings of the contactors 141, 1421, 143 (typically for every opening), the control unit 117 logs the current and voltage for each contactor being opened by means of the sensors 151, 152, 153, and typically at least during the electric arc formation, and optionally log the temperature of the corresponding contactor. With this measurement data, potentially together with the altitude data of the vehicle and measured inductance, the contactor wear, or contactor wear contribution, can be determined using the characterization model. Thus, the contactor state of health can be accounted for and decreased in an accurate way.

In more general terms, the control unit 117 is configured to provide a characterization model for each one the contactors 141, 142, 143. As previously described, the characterization model defines contactor wear for contactor opening with regards to a plurality of system parameters, the system parameters comprising at least current and voltage during contactor opening. Moreover, the control unit 117 is configured to determine the system parameters during operation of the switching arrangement 115. For example, at least the contactor current and contactor voltage during contactor opening are measured by the sensors 151, 152, 153. The control unit 117 is thus configured to estimate, for each one of the contactors 141, 142, 143, the contactor wear by applying the determined system parameters to the corresponding characterization model. Hereby, the control unit 117 may control the order in which the contactors 141, 142, 143 are opened in response to the estimated contactor wear, and/or predict maintenance of contactor 141, 142, 143, or contactor exchange, in response to the estimated contactor wear.

In more detail, the switching arrangement 115 is, via the control unit 117, configured to disconnect the first, second and third battery packs 131, 132, 133 from the common traction voltage bus 135 by means of the first, second and third contactors 141, 142, 143, respectively, such that the first, second and third battery packs 131, 132, 133 are disconnected in an order in which one contactor, e.g. the first contactor 141, is opened first, one contactor, e.g. the second contactor 142, is opened second, and one contactor, e.g. the third contactor 143, is opened last so that all battery packs 131, 132, 133 are disconnected (i.e. so that no battery pack is longer connected to the common traction voltage bus 135). For each contactor opening, the control unit 117 may apply the characterization model using the system parameters to calculate and estimate the contactor wear. Hereby, the accumulated contactor wear for each one of the contactors 141, 142, 143 can be determined and logged.

For example, in a first state, being a fully connected state, each one of the first, second and third contactors 141, 142, 143 are closed and each one of the first, second and third battery packs 131, 132, 133 are connected to the common traction voltage bus 135, and are thus able to power any of the loads 110a, 110b. In a second state, being a disconnection state, each one of the first, second and third contactors 141, 142, 143 are opened in such a way that each one of the first, second and third battery packs 131, 132, 133 are being disconnected from the common traction voltage bus 135, terminating powering of the loads 110a, 110b (e.g. in response to a shut-off signal of the loads 110a, 110b). During the disconnection, two of the battery packs, e.g. the first and second battery packs 131, 132 in the example above, are disconnected prior to the third battery pack 131, by that the first and second contactors 141, 142 are opened. When the first and second contactors 141, 142 are opened, a relatively small electric arc will appear in the air gap of the first and second contactors 141, 142, as the third battery pack 133 is kept connected to the common traction voltage bus 135, and an alternative path of the current is available. Thus, the first and second contactors 141, 142 will be subject to a relatively small contactor wear, which is determined by implementing the characterization model by the control unit 117. During disconnection of the third battery pack 133, the third contactor 143 is opened (i.e. opened last of the three contactors 141, 142, 143), meaning that subsequent to opening the third contactor 143, no battery packs is connected to the common traction voltage bus 135. As a result, a relatively large electric arc will be formed in the air gap of the third contactor 143, the electric arc being especially prominent as all battery packs 131, 132, 133 of the energy storage system 130 are being disconnected and the inductive circuit involving the loads 110a, 110b will be interrupted or broken. The formation of such electric arc leads to a relatively large contactor wear of the third contactor 143, which is determined by implementing the characterization model by the control unit 117. Disconnection of the third contactor 143 results in a third state of the energy storage system 130, being a disconnected state, each one of the first, second and third contactors 141, 142, 143 are open, and each one of the first, second and third battery packs 131, 132, 133 are disconnected from the common traction voltage bus 135. Thus, the loads 110a, 110b cannot be powered by the energy storage system 130. Thus, to summarize the first to third states, the control unit 117 may be configured to identify the plurality of parallelly arranged battery packs 131, 132, 133 connected to the common traction voltage bus 135 of the energy storage system 130, and identify the associated contactors 141, 142, 143 to the plurality of parallelly arranged battery packs 131, 132, 133, wherein controlling the order in which the contactors 141, 142, 143 are opened is performed for all of the plurality of parallelly arranged battery packs 131, 132, 133 until no battery pack 131, 132, 133 is connected to the common traction voltage bus.

Assuming equal contactor wear prior to such disconnection of the battery packs 131, 132, 133, the third contactor 143 will have an accumulated contactor wear which is higher than the first and second contactors 141, 142. In other words, the third contactor 143 is more likely to be subject to contactor failure compared to the first and second contactors 141, 142. Therefore, upon a subsequent disconnection of the battery packs 131, 132, 133 (obviously following a prior connection of the battery packs 131, 132, 133 by closing the contactors 141, 142, 143) the control unit 117 controls the order of which the contactors 141, 142, 143 are opened such that one of the first and second contactors 141, 142 is instead opened last. In other words, the higher accumulated contactor wear of the third contactor 143 as described above, is taken into account during a subsequent repetition of the first, second and third states. Thus, the control unit 117 may be configured to control the order in which the contactors 141, 142, 143 are opened in response to the estimated contactor wear in such a way that the contactor wear is accounted for and used to distribute contactor wear among the contactors 141, 142, 143 during subsequent opening of the contactors 141, 142, 143. Hereby, the contactor wear are better distributed among the contactors 141, 142, 143 in the switching arrangement 115. Thus, excessive contactor wear of a single contactor leading to contactor failure may be avoided, or at least reduced. For example, the order of disconnecting the battery packs 131, 132, 133 may be controlled such that a battery pack other than the battery pack having a contactor with the highest accumulated contactor wear is disconnected last.

In addition to, or as an alternative to controlling the order in which the contactors 141, 142, 143 are opened in response to the estimated contactor wear, as described above, the control unit 117 may predict maintenance of contactor 141, 142, 143, or contactor exchange, in response to the estimated contactor wear. For example, if the accumulated contactor wear for one contactor reaches a predetermined threshold, e.g. 20 % of the contactor state of health, the control unit 117 may indicate (e.g. to the driver of the vehicle) that such contactor is to be serviced, or exchanged. Hereby, excessive contactor wear of a single contactor leading to contactor failure may be avoided, or at least reduced. In case one contactor is exchanged, and a new contactor with no accumulated contactor wear is replacing the old contactor, such contactor will more frequently be disconnected last as a result of distributing the contactor wear among the contactors (at least in the beginning of its operation).

The control unit 117 is typically configured to keep track of the contactor wear, or accumulated contactor wear, of each one of the first, second and third contactors 141, 142, 143. As seen in Fig. 2, the switching arrangement 115 further comprises a memory 118 comprised in the control unit 117. Such memory 118 may be used to keep track of the contactor wear, or accumulated contactor wear. Moreover, the memory 118 may be used to store the characterization model.

The switching arrangement 115 may, via the control unit 117, be further configured to connect the battery packs 131, 132, 133 to the common traction voltage bus 135 by closing the contactors 141, 142, 143, and to alternately connect and disconnect the battery packs 131, 132, 133 from and to the common traction voltage bus 135, wherein controlling the order in which the contactors 141, 142, 143 are opened, as described above, is performed for each disconnection. The order may e.g. comprise cycling which of the first, second and third battery packs 131, 132, 133 that is being disconnected last, and thus which of the first, second and third contactors 141, 142, 143 that is being opened last.

It should be mentioned that the switching arrangement 115 of Fig. 2 may further comprise a first pre-charge contactor arranged in parallel to the first contactor 141, wherein the first pre-charge contactor is arranged in series with a first pre-charge resistor, and comprise a second pre-charge contactor arranged in parallel to the second contactor 142, wherein the second pre-charge contactor is arranged in series with a second pre-charge resistor, and comprise a third pre-charge contactor arranged in parallel to the third contactor 143, wherein the third pre-charge contactor is arranged in series with a third pre-charge resistor. Moreover, the first battery pack 131 may be connected in series with a first secondary contactor arranged on the opposite side of the first battery pack 131 as compared to the first contactor 141 (e.g. the first contactor 141 being arranged at a positive terminal side of the first battery pack 131, and the first secondary contactor being arrange at a negative terminal side of the first battery pack 131). Correspondingly, the second battery pack 132 may be connected in series with a second secondary contactor arranged on the opposite side of the second battery pack 132 as compared to the second contactor 142, and the third battery pack 133 may be connected in series with a third secondary contactor arranged on the opposite side of the third battery pack 133 as compared to the third contactor 143.

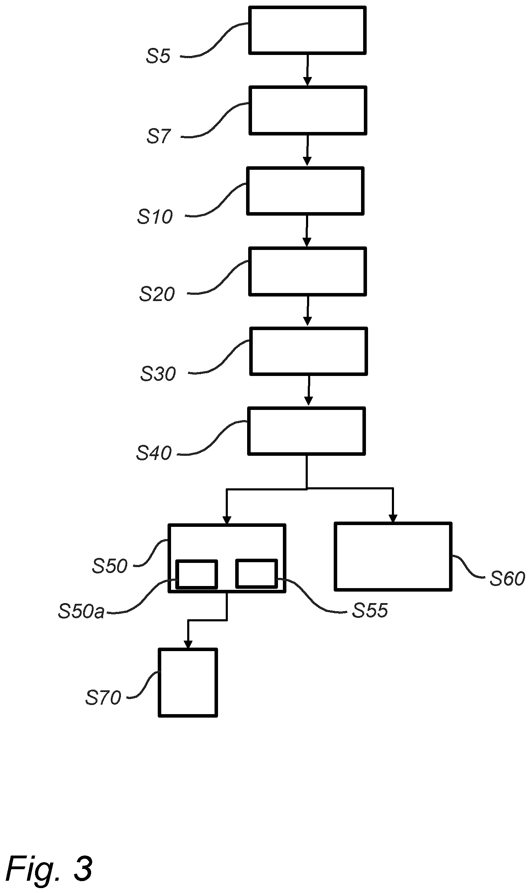

FIG. 3 is a flow chart of a computer-implemented method for controlling a switching arrangement of an energy storage system of a vehicle, such as the switching arrangement 115 and the energy storage system 130 of Fig. 2.

In a first action, or step, S10, a characterization model for each one of a plurality of contactors of the switching arrangement is provided by a processing circuitry of a computer system. Each contactor of the switching arrangement is configured to connect and disconnected an associated battery pack of the energy storage system of the vehicle by closing and opening, respectively. The characterization model defines contactor wear for contactor opening with regards to a plurality of system parameters, the system parameters comprising at least current and voltage during contactor opening. The characterization model may e.g. be that described with reference to Fig. 4. The characterization model may thus define the contactor wear as a function of the plurality of system parameters, the system parameters comprising at least current and voltage during contactor opening and additionally a third system parameter being at least one of the following: temperature, inductance, altitude, and contactor design during contactor opening. For example, and with reference to Fig. 1, the processing circuitry may comprise, or be comprised in, the control unit 17 of the vehicle 1, or with reference to Fig. 2, the processing circuitry may comprise, or be comprised in, the control unit 117 of the switching arrangement 115.

In a second, optional action or step S20, measurement data is received, by the processing circuitry, from a plurality of sensors of the energy storage system, wherein the measurement data comprises the system parameters.

In a third action or step S30, the system parameters is determined by the processing circuitry during operation of the switching arrangement.

In a fourth action or step S40, for each one of the contactors, the contactor wear is estimated by the processing circuitry by applying the determined system parameters to the corresponding characterization model.

In a fifth action or step S50, the order in which the contactors are opened is controlled by the processing circuitry in response to the estimated contactor wear. That is, the battery packs are being disconnected as the associated contactors are opened.

Alternatively or additionally, in a sixth action or step S60, maintenance of contactor, or contactor exchange, is predicted by the processing circuitry in response to the estimated contactor wear. For example, the contactor maintenance information may be sent to a display, such as e.g. a vehicle monitor. Hereby, the driver of the vehicle may utilize the contactor maintenance information and decide upon service of the switching arrangement. That is, the fifth action or step S50 and the sixth action or step S60 may be parallel actions or steps, as shown in Fig. 3, or they may be sequential actions or steps in which action or step S50 is performed prior to action or step S60, or action or step S60 is performed prior to action or step S50.

In a first optional pre-action or pre-step S5 to the first action or step S10, a plurality of parallelly arranged battery packs connected to a common traction voltage bus of the energy storage system is identified by the processing circuitry. In a second optional pre-action or step S7 to the first action or step S 10, the associated contactors to the plurality of parallelly arranged battery packs are identified by the processing circuitry. Thus, the fifth action or step S50 of controlling the order in which the contactors are opened may be performed for all of the plurality of parallelly arranged battery packs until no battery pack is connected to the common traction voltage bus.

As previously mentioned, the method may comprise a seventh action or step S70 of closing, by the processing circuitry, the contactors to connect the battery packs to the common traction voltage bus. Moreover, as previously described, the battery packs may be alternately connected and disconnected from and to the common traction voltage bus, wherein the actions or steps of disconnection include controlling the order in which the contactors are opened. In other words, the fifth action or step S50 may comprise repeatedly performing the third and fourth actions or steps S30, S40, possibly together with the optional second action or step S20. Thus, the controlled order of disconnection of the battery packs by the switching arrangement may be applied over time and during the operation of the energy storage system. For example, the controlled order of disconnection of the battery packs by the switching arrangement may comprise cycling which battery pack that is being disconnected last.

It should be noted that not all battery packs of the energy storage system need to be connected each time a load connected to the common traction voltage bus is to be powered by the energy storage system. For example, in case the load is only requiring two out of three battery packs in order to be powered, the third battery pack, and thus the associated contactor to the third battery pack, may rest during such case. During disconnection of the connected battery packs, the controlled sequence of disconnection by the switching arrangement will be applied to the battery packs being connected to the common traction voltage bus for powering the load, i.e. in this case the first and second battery packs.

In an optional sub-action or sub-step S55 to the fifth action or step S50, accumulated contactor wear for each one of the contactors is determined by the processing circuitry by applying the characterization model for each one of the contactors during each contactor opening. The fifth action or step S50 may be carried out by controlling S50a the order in which the contactors are opened in response to the estimated contactor wear in such a way that the contactor wear is accounted for and used to distribute contactor wear among the contactors during subsequent opening of the contactors. In other words, the accumulated contactor wear of each contactor may be logged.

The control unit 17 of Fig. 1, or the control unit 117 of Fig. 2, may be configured to perform the method as described with reference to Fig. 3. The method as described with reference to Fig. 3 may thus be implemented in a computer program product comprising program code for performing, when executed by the processing circuitry, the method described with reference to Fig. 3. Alternatively the method as described with reference to Fig. 3 may be implemented in a non-transitory computer-readable storage medium comprising instructions, which when executed by the processing circuitry, cause the processing circuitry to perform the method as described with reference to Fig. 3. Thus, the control unit 17 may comprise instructions to cause the energy storage system 30 to be operated according to at least some of the actions or steps described with reference to Fig. 3. Moreover, the control unit 117 of Fig. 2 may comprise instructions to cause the switching arrangement 115 to be operated according to at least some of the actions or steps described with reference to Fig. 3. The control unit 17 of the vehicle 1 of Fig. 1, and the control unit 117 of the switching arrangement 115 of Fig. 2, may constitute, or be comprised in, a control system comprising one or more control units configured to perform the method as described with reference to Fig. 3. Such control system 1000 is now described with reference to Fig. 5.

**FIG. 5** is a schematic diagram of a computer system 1000 for implementing examples disclosed herein, e.g. the method as described with reference to Fig. 3. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include a processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with a processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hardcoded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system comprising processing circuitry configured to:

- provide a characterization model for each one of a plurality of contactors of a switching arrangement, each contactor being configured to connect and disconnected an associated battery pack of an energy storage system of a vehicle by closing and opening, respectively, the characterization model defining contactor wear for contactor opening with regards to a plurality of system parameters, the system parameters comprising at least current and voltage during contactor opening,
- determine the system parameters during operation of the switching arrangement,
- estimate, for each one of the contactors, the contactor wear by applying the determined system parameters to the corresponding characterization model;
- control the order in which the contactors are opened in response to the estimated contactor wear, and/or predicting maintenance of contactor, or contactor exchange, in response to the estimated contactor wear.

Example 2. The computer system of example 1, wherein the processing circuitry is further configured to: receive measurement data from a plurality of sensors of the energy storage system, wherein the measurement data comprises the system parameters.

Example 3. The computer system of any of examples 1-2, wherein the processing circuitry is further configured to: identify a plurality of parallelly arranged battery packs connected to a common traction voltage bus of the energy storage system, and identify the associated contactors to the plurality of parallelly arranged battery packs, wherein controlling the order in which the contactors are opened is performed for all of the plurality of parallelly arranged battery packs until no battery pack is connected to the common traction voltage bus.

Example 4. The computer system of example 3, wherein the processing circuitry is further configured to: subsequent to controlling the order in which the contactors are opened, connect the battery packs to the common traction voltage bus by closing the contactors, and thereafter: alternately connect and disconnect the battery packs from and to the common traction voltage bus, wherein controlling the order in which the contactors are opened is performed for each disconnection.

Example 5. The computer system of any of examples 1-4, wherein the processing circuitry is further configured to: determine accumulated contactor wear for each one of the contactors by applying the characterization model for each one of the contactors during each contactor opening.

Example 6. The computer system of any of examples 1-5, wherein the system parameters further include at least one of the following: temperature, inductance, altitude, and contactor design during contactor opening.

Example 7. The computer system of any of examples 1-6, wherein the characterization model defines the contactor wear as a function of the plurality of system parameters, the system parameters comprising at least current and voltage during contactor opening and additionally a third system parameter being at least one of the following: temperature, inductance, altitude, and contactor design during contactor opening.

Example 8. The computer system of any of examples 1-7, wherein the characterization model is defined by:

$$CW = A*I + B*V + C*X$$

wherein CW is the contactor wear for a contactor, I is the current over the contactor, V is the voltage over the contactor, X is a third system parameter, e.g. the temperature, at contactor opening and A, B and C are constants.

Example 9. The computer system of any of examples 1-8, wherein the processing circuitry is further configured to: control the order in which the contactors are opened in response to the estimated contactor wear in such a way that the contactor wear is accounted for and used to distribute contactor wear among the contactors during subsequent opening of the contactors.

Example 10. The computer system of any of examples 1-9, wherein the processing circuitry is further configured to: control the order in which the contactors are opened in response to the estimated contactor wear in such a way that a contactor other than the contactor having the highest contactor wear is opened as the last contactor.

Example 11. A switching arrangement for an energy storage system of vehicle, the energy storage system comprising a plurality of parallelly arranged battery packs, the switching arrangement comprises:

- an associated contactor for each battery pack, the contactors being configured to connect and disconnect the battery packs by closing and opening, respectively,
- a control unit configured to:
- provide a characterization model for each one the contactors, the characterization model defining contactor wear for contactor opening with regards to a plurality of system parameters, the system parameters comprising at least current and voltage during contactor opening,
- determine the system parameters during operation of the switching arrangement,
- estimate, for each one of the contactors, the contactor wear by applying the determined system parameters to the corresponding characterization model;
- control the order in which the contactors are opened in response to the estimated contactor wear, and/or predicting maintenance of contactor, or contactor exchange, in response to the estimated contactor wear.

Example 12. A vehicle comprising the computer system of any of examples 1-10, or a switching arrangement of example 11.

Example 13. A computer-implemented method, comprising:

- providing, by a processing circuitry of a computer system, a characterization model for each one of a plurality of contactors of a switching arrangement, each contactor being configured to connect and disconnected an associated battery pack of an energy storage system of a vehicle by closing and opening, respectively, the characterization model defining contactor wear for contactor opening with regards to a plurality of system parameters, the system parameters comprising at least current and voltage during contactor opening,
- determining, by the processing circuitry, the system parameters during operation of the switching arrangement,
- estimating, by the processing circuitry, for each one of the contactors, the contactor wear by applying the determined system parameters to the corresponding characterization model;
- controlling, by the processing circuitry, the order in which the contactors are opened in response to the estimated contactor wear, and/or predicting, by the processing circuitry, maintenance of contactor, or contactor exchange, in response to the estimated contactor wear.

Example 14. The method of example 13, further comprising: - receiving, by the processing circuitry, measurement data from a plurality of sensors of the energy storage system, wherein the measurement data comprises the system parameters.

Example 15. The method of any of examples 13-14, further comprising: - identifying, by the processing circuitry, a plurality of parallelly arranged battery packs connected to a common traction voltage bus of the energy storage system, and identifying, by the processing circuitry, the associated contactors to the plurality of parallelly arranged battery packs, wherein controlling the order in which the contactors are opened is performed for all of the plurality of parallelly arranged battery packs until no battery pack is connected to the common traction voltage bus.

Example 16. The method of any of examples 13-15, further comprising: - determining, by the processing circuitry, accumulated contactor wear for each one of the contactors by applying the characterization model for each one of the contactors during each contactor opening.

Example 17. The method of any of examples 13-16, wherein the characterization model defines the contactor wear as a function of the plurality of system parameters, the system parameters comprising at least current and voltage during contactor opening and additionally a third system parameter being at least one of the following: temperature, inductance, altitude, and contactor design during contactor opening.

Examples 18. The method of any of examples 13-17, further comprising: - controlling, by the processing circuitry, the order in which the contactors are opened in response to the estimated contactor wear in such a way that the contactor wear is accounted for and used to distribute contactor wear among the contactors during subsequent opening of the contactors.

Example 19. A computer program product comprising program code for performing, when executed by the processing circuitry, the method of any of examples 12-18.

Example 20. A non-transitory computer-readable storage medium comprising instructions, which when executed by the processing circuitry, cause the processing circuitry to perform the method of any of examples 12-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system comprising processing circuitry configured to:

   - provide a characterization model for each one of a plurality of contactors of a switching arrangement, each contactor being configured to connect and disconnected an associated battery pack of an energy storage system of a vehicle by closing and opening, respectively, the characterization model defining contactor wear for contactor opening with regards to a plurality of system parameters, the system parameters comprising at least current and voltage during contactor opening,

   - determine the system parameters during operation of the switching arrangement,
   - estimate, for each one of the contactors, the contactor wear by applying the determined system parameters to the corresponding characterization model;
   - control the order in which the contactors are opened in response to the estimated contactor wear, and/or predicting maintenance of contactor, or contactor exchange, in response to the estimated contactor wear.

2. The computer system of claim 1, wherein the processing circuitry is further configured to: receive measurement data from a plurality of sensors of the energy storage system, wherein the measurement data comprises the system parameters.

3. The computer system of any of claims 1-2, wherein the processing circuitry is further configured to: identify a plurality of parallelly arranged battery packs connected to a common traction voltage bus of the energy storage system, and identify the associated contactors to the plurality of parallelly arranged battery packs, wherein controlling the order in which the contactors are opened is performed for all of the plurality of parallelly arranged battery packs until no battery pack is connected to the common traction voltage bus.

4. The computer system of claim 3, wherein the processing circuitry is further configured to: subsequent to controlling the order in which the contactors are opened, connect the battery packs to the common traction voltage bus by closing the contactors, and thereafter:
   alternately connect and disconnect the battery packs from and to the common traction voltage bus, wherein controlling the order in which the contactors are opened is performed for each disconnection.

5. The computer system of any of claims 1-4, wherein the processing circuitry is further configured to: determine accumulated contactor wear for each one of the contactors by applying the characterization model for each one of the contactors during each contactor opening.

6. The computer system of any of claims 1-5, wherein the characterization model defines the contactor wear as a function of the plurality of system parameters, the system parameters comprising at least current and voltage during contactor opening and additionally a third system parameter being at least one of the following: temperature, inductance, altitude, and contactor design during contactor opening.

7. The computer system of any of claims 1-6, wherein the processing circuitry is further configured to: control the order in which the contactors are opened in response to the estimated contactor wear in such a way that the contactor wear is accounted for and used to distribute contactor wear among the contactors during subsequent opening of the contactors.

8. The computer system of any of claims 1-7, wherein the processing circuitry is further configured to: control the order in which the contactors are opened in response to the estimated contactor wear in such a way that a contactor other than the contactor having the highest contactor wear is opened as the last contactor.

9. A switching arrangement (15, 115) for an energy storage system (30, 130) of vehicle (1), the energy storage system comprising a plurality of parallelly arranged battery packs (31, 32, 33, 131, 132, 133), the switching arrangement comprises:

> - an associated contactor (141, 142, 143) for each battery pack, the contactors being configured to connect and disconnect the battery packs by closing and opening, respectively,
> - a control unit (117) configured to:
> - provide a characterization model for each one the contactors, the characterization model defining contactor wear for contactor opening with regards to a plurality of system parameters, the system parameters comprising at least current and voltage during contactor opening,
> - determine the system parameters during operation of the switching arrangement,
> - estimate, for each one of the contactors, the contactor wear by applying the determined system parameters to the corresponding characterization model;
> - control the order in which the contactors are opened in response to the estimated contactor wear, and/or predicting maintenance of contactor, or contactor exchange, in response to the estimated contactor wear.

10. A vehicle comprising the computer system of any of claims 1-8, or a switching arrangement of claim 9.

11. A computer-implemented method, comprising:

> - providing (S10), by a processing circuitry of a computer system, a characterization model for each one of a plurality of contactors of a switching arrangement, each contactor being configured to connect and disconnected an associated battery pack of an energy storage system of a vehicle by closing and opening, respectively, the characterization model defining contactor wear for contactor opening with regards to a plurality of system parameters, the system parameters comprising at least current and voltage during contactor opening,
- determining (S30), by the processing circuitry, the system parameters during operation of the switching arrangement,
- estimating (S40), by the processing circuitry, for each one of the contactors, the contactor wear by applying the determined system parameters to the corresponding characterization model;
- controlling (S50), by the processing circuitry, the order in which the contactors are opened in response to the estimated contactor wear, and/or predicting (S60), by the processing circuitry, maintenance of contactor, or contactor exchange, in response to the estimated contactor wear.

12. The method of claim 11, wherein the characterization model defines the contactor wear as a function of the plurality of system parameters, the system parameters comprising at least current and voltage during contactor opening and additionally a third system parameter being at least one of the following: temperature, inductance, altitude, and contactor design during contactor opening.

13. The method of any of claims 11-12, further comprising:

> - controlling (S50a), by the processing circuitry, the order in which the contactors are opened in response to the estimated contactor wear in such a way that the contactor wear is accounted for and used to distribute contactor wear among the contactors during subsequent opening of the contactors.

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.

EP 4 480 734 A1

Fig. 1

*Fig. 2*

*Fig. 3*

*800*

Fig. 4

Fig. 5

Europäisches
Patentamt

European
Patent Office

Office européen
des brevets

# EUROPEAN SEARCH REPORT

**Application Number**

EP 23 18 0042

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 211 800 B2 (NISHI YUJI [JP]; FUJII SHUNSUKE [JP]; TOYOTA MOTOR CO LTD [JP]) 15 December 2015 (2015-12-15) | 1,2,5-7, 9-15 | INV. B60L3/00 B60L3/12 |
| Y | * column 9, lines 2-7,15-18,28-34; figure 1 *<br>* column 8, lines 4-6,63-65 *<br>* column 7, lines 62-64 *<br>* column 2, lines 15-18 *<br>----- | 1,2,9, 11,14,15 | B60L58/21 H02J7/14 |
| X | CN 115 352 279 A (VOLVO TRUCK CORP) 18 November 2022 (2022-11-18) | 3-5,7,8, 10,13 | |
| Y | * paragraphs [0001], [0009], [0013], [0022], [0027], [0034], [0037]; figure 2 *<br>----- | 1,2,6,9, 11,12, 14,15 | |
| Y | WO 2020/193466 A1 (EATON INTELLIGENT POWER LTD [IE]) 1 October 2020 (2020-10-01) * paragraph [0817] *<br>----- | 6,12 | |

**TECHNICAL FIELDS SEARCHED (IPC)**

B60L
H02J

The present search report has been drawn up for all claims

| Place of search | Date of completion of the search | Examiner |
|---|---|---|
| The Hague | 8 November 2023 | Bellatalla, Filippo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

**EP 23 18 0042**

This annex lists the patent family members relating to the patent documents cited in  the above-mentioned European search report.
The members are as contained in the European Patent Office EDP file on
The European Patent Office is in no way liable for these particulars which are merely given for the purpose of information.

08-11-2023

| Patent document cited in search report | | Publication date | Patent family member(s) | | Publication date |
|---|---|---|---|---|---|
| US 9211800 | B2 | 15-12-2015 | CN | 102934316 A | 13-02-2013 |
| | | | EP | 2720344 A1 | 16-04-2014 |
| | | | JP | 5440708 B2 | 12-03-2014 |
| | | | JP | WO2012168963 A1 | 23-02-2015 |
| | | | US | 2013063091 A1 | 14-03-2013 |
| | | | WO | 2012168963 A1 | 13-12-2012 |
| CN 115352279 | A | 18-11-2022 | CN | 115352279 A | 18-11-2022 |
| | | | EP | 4084265 A1 | 02-11-2022 |
| | | | US | 2022352727 A1 | 03-11-2022 |
| WO 2020193466 | A1 | 01-10-2020 | EP | 3942662 A1 | 26-01-2022 |
| | | | WO | 2020193466 A1 | 01-10-2020 |

EPO FORM P0459

For more details about this annex : see Official Journal of the European Patent Office, No. 12/82